# EUROPÄISCHE PATENTSCHRIFT

(11) **EP 1 090 703 B1**
(45) Veröffentlichungstag und Bekanntmachung des Hinweises auf die Patenterteilung: **29.01.2003**
(21) Anmeldenummer: 00121885.8
(22) Anmeldetag: 06.10.2000
(51) Int. Cl.: B23B 31/12, B23B 31/00, B23B 31/30

(54) **Vorrichtung zum Positionieren und Spannen von Werkstücken**
Device for positioning and clamping workpieces
Dispositif pour positionner et serrer des pièces à usiner

(30) Priorität: 06.10.1999 DE 29917583 U
(43) Veröffentlichungstag der Anmeldung: 11.04.2001
(73) Patentinhaber: Reis, Dieter, 61440 Oberursel (DE)
(72) Erfinder: Reis, Dieter, 61440 Oberursel (DE)
(74) Vertreter: Luderschmidt, Schüler & Partner GbR

(56) Entgegenhaltungen:
- DE-A- 2 042 235
- US-A- 1 909 323
- US-A- 2 829 900

## Beschreibung

Die vorliegende Erfindung betrifft eine Vorrichtung zum Spannen von Werkstücken, gemäß dem Oberbegriff des Anspruchs 1. Eine solche Vorrichtung ist aus der DE-A-2 042 235 bekannt.

In der DE-A-2 042 235 wird ein Spannelement beschrieben, das zur fluchtenden Ausrichtung der Bohrungen zweier Werkstücke bestimmt ist. Das bekannte Spannelement weist zwei fluchtend angeordnete Druckringe auf, die gegeneinander verschoben werden können. Zwischen den Druckringen sind Kugeln angeordnet, die rotationssymmetrisch um den Umfang des Spannelements verteilt und über Zugfedern verbunden sind. Die Kugeln grenzen an die beiden Druckringe an, wobei ein Druckring eine kegelförmige Auflagefläche aufweist. Werden die Druckringe gegeneinander verschoben, so werden die Kugeln entgegen der Kraft der Zugfedern in radialer Richtung nach außen bewegt und gegen die Innenwand der Bohrung des Werkstücks gedrückt.

Um das bekannte Spannelement in der Bohrung zu zentrieren, werden die Druckringe zunächst so weit aufeinander zu bewegt, daß die Kugeln die Innenwand der Bohrung berühren. Zur exakten Positionierung kann das Spannelement zwar innerhalb der Bohrung gedreht werden, allerdings rollen die Kugeln dann an der Innenwand der Bohrung einerseits und den angrenzenden Druckringen andererseits ab. Dadurch können sich die Kugeln verdrehen, so daß eine genaue Positionierung letztlich nicht möglich ist. Darüber hinaus werden die Zugfedern beim Verdrehen der Kugeln stärker belastet.

Die Aufgabe der vorliegenden Erfindung besteht somit darin, eine Vorrichtung zum Spannen von Werkstücken, insbesondere von Werkstücken mit runden oder eckigen Löchern, zu schaffen, die ein exaktes Positionieren der Spannelemente an der Innenwand der Löcher ermöglicht.

Die Lösung der Aufgabe erfolgt erfindungsgemäß mit den im Patentanspruch 1 angegebenen Merkmalen. Vorteilhafte Ausführungsformen der Erfindung sind Gegenstand der Unteransprüche.

Bei der erfindungsgemäßen Vorrichtung sind in der Anlagefläche des ersten und/oder zweiten Spannkörpers den Spannelementen zugeordnete Führungsnuten vorgesehen. Die Führungsnuten sind derart ausgebildet, daß die Spannelemente in diesen radial nach außen geführt sind.

Werden die beiden Spannkörper aufeinander zu bewegt, so werden die Spannelemente durch die Schrägstellung der Anlageflächen radial nach außen gedrückt. Während dieser Bewegung sind die Spannelemente stets in der Führungsnut geführt, so daß sie entlang der Führungsnut zu einem genau definierten Punkt gelangen, an dem sie an dem zu verspannenden Werstück anliegen. Ein Abrollen der Spannelemente an den Anlageflächen der Spannkörper einerseits und dem Werkstück andererseits wird durch die Führungsnut unterbunden.

Die Führungsnut kann einen beliebig geformten Querschnitt aufweisen, muß allerdings dazu geeignet sein, eine Bewegung der Spannelemente um die Achse der Spannkörper zu verhindern. So ist beispielsweise eine Führungsnut möglich, die zwei gerade und schräg zueinander verlaufende Nutflanken und einen kreisbogenförmigen Nutgrund aufweist.

In einer vorteilhaften Ausführungsform der erfindungsgemäßen Vorrichtung sind die Spannelemente als Kugeln ausgebildet. Die Kugelform bietet den Vorteil, daß an den angrenzenden Anlageflächen eine punktförmige Anlage erfolgt, so daß ein Verklemmen zwischen den beiden Anlageflächen der Spannkörper weitgehend ausgeschlossen werden kann.

In einer weiteren bevorzugten Ausführungsform der erfindungsgemäßen Vorrichtung sind die Führungsnuten V-förmig ausgebildet, so daß die kugelförmigen Spannelemente zwei Auflagepunkte, nämlich jeweils auf einer Nutflanke, haben.

Um eine Vorrichtung zu schaffen, die neben den oben genannten Vorteilen auch einfach herzustellen ist, sind die Führungsnuten in einer bevorzugten Ausführungsform kreisbogenförmig ausgebildet. Der Radius des Kreisbogens entspricht dabei dem Radius der Spannelemente in Form der Kugeln. Kreisbogenförmige Führungsnuten können insofern einfacher hergestellt werden, da die im Nutgrund verlaufende Längslinie leichter voreingestellt werden kann, als beispielsweise bei einer V-Nut. Im Falle der kreisbogenförmigen Führungsnut kommt es zwischen der Führungsnut und der Kugel zu einer linienförmigen Anlage.

Um die federnde Verbindung zwischen den Kugeln gleichmäßig zu belasten, sind in einer besonders bevorzugten Ausführungsform der Vorrichtung durchgehende Bohrungen in den Kugeln vorgesehen, durch die sich eine ringförmige Zugfeder erstreckt. Die Bohrung kann dabei einen größeren Durchmesser als die Zugfeder aufweisen, so daß diese auf der Zugfeder verschiebbar sind. Dies ist insofern von Vorteil, da die Zugfeder mitsamt den Kugeln auch auf andere Vorrichtungen ähnlicher Art aufgesetzt werden kann, bei denen die Führungsnuten unterschiedliche Abstände zueinander aufweisen. Die Bohrung kann allerdings auch derart dimensioniert sein, daß Kugel und Zugfeder kraftschlüssig miteinander verbunden und somit vordefinierte genaue Abstände zwischen den Kugeln vorgegeben sind.

In einer weiteren vorteilhaften Ausführungsform der erfindungsgemäßen Vorrichtung sind die Mittelachsen der in den Bohrungen liegenden Abschnitte der Zugfeder gegenüber den Mittelachsen der nicht in der Bohrung liegenden Abschnitte der Zugfeder versetzt angeordnet. Auf diese Weise sind die Kugeln auf der Zugfeder formschlüssig festgesetzt, ohne daß eine kraftschlüssige Verbindung zwischen Kugel und Zugfeder erforderlich ist. Ein derartiger Kranz aus Zugfeder und Kugeln ist besonders einfach herstellbar. Allerdings ist auch eine Mischform der beiden Verbindungsarten möglich.

Wenn die Spannelemente von Kugeln gebildet werden, besteht zwischen der Kugel und der Wandung beispielsweise einer Bohrung o. ä. stets eine punktförmige Anlagefläche, so daß der Druck an dieser Stelle sehr hoch ist. Dies kann dazu führen, daß der Werkstoff des Werkstückes an dieser Stelle nachgibt, so daß an diesen Stellen Vertiefungen entstehen und somit Nachbesserungsarbeiten notwendig werden. Aus diesem Grunde weist die Vorrichtung in einer besonders bevorzugten Ausführungsform zusätzliche Druckkörper auf, die an den nach außen weisenden Seiten der Kugeln angeordnet sind. Es ist hierbei nicht erforderlich, daß die Druckkörper an den Kugeln befestigt sind, allerdings müssen diese durch die radial verschiebbaren Kugeln gegen das Werkstück gedrückt werden können. Die Druckkörper sind derart geformt, daß zwischen Druckkörper und Wandung der Bohrung o. ä. ein linienförmiger oder gar flächiger Berührungsbereich entsteht, so daß dadurch der auf das Werkstück ausgeübte Druck verringert wird. Der Einsatz derartiger Druckkörper ist von eigenständiger erfinderischer Bedeutung, d. h. die Druckkörper bieten auch ohne die Führungsnut in den Anlageflächen der Spannkörper Vorteile.

In einer weiteren vorteilhaften Ausführungsform sind die Druckkörper kappenförmig ausgebildet und können mit den Kugeln lösbar verbunden werden. Unter einem kappenförmigen Druckkörper ist ein Druckkörper zu verstehen, der die Kugel teilweise umschließt und eine Ausnehmung zum Einlegen der Kugel aufweist. Durch die Lösbarkeit der Druckkörper können diese gewechselt werden. So ist es beispielsweise möglich, einen Druckkörper mit kreisbogenförmiger Kontur gegen einen Druckkörper mit geradliniger Kontur auszutauschen, wenn Werkstücke mit rechteckigen anstelle von kreisrunden Aussparungen verspannt werden sollen.

In einer bevorzugten Ausführungsform der erfindungsgemäßen Vorrichtung sind die Druckkörper radial verschiebbar an dem ersten und/oder zweiten Spannkörper angeordnet. Die radiale Verschiebbarkeit kann beispielsweise ähnlich wie bei den Spannelementen erfolgen, indem die Druckkörper über ein Federelement verbunden sind.

Damit die an einem der Spannkörper angeordneten Druckkörper ähnlich wie die Kugeln genau positionierbar sind, weisen die Druckkörper in einer besonders bevorzugten Ausführungsform der Vorrichtung an ihrer an die Kugeln angrenzenden Seite eine Nut auf, in der die Kugeln jeweils geführt sind. Auf diese Weise verhindert die Führungsnut in dem Spannkörper ein Verdrehen der Kugel und die in der Nut des Druckkörpers liegende Kugel ein Verdrehen des Druckkörpers.

Im folgenden wird die Erfindung anhand von Ausführungsbeispielen unter Bezugnahme auf die beigefügten Figuren eingehender erläutert.

Es zeigen:
- Fig. 1: eine Seitenansicht einer ersten Ausführungsform der erfindungsgemäßen Vorrichtung in geschnittener Darstellung,
- Fig. 2: eine Ansicht der Vorrichtung in der ersten Ausführungsform in Richtung des Pfeiles A in Fig.1,
- Fig. 3: eine Draufsicht auf die Schnittlinie B-B von Fig.1,
- Fig. 4: eine vergrößerte Darstellung einer Kugel und der Zugfeder von Fig. 3 in geschnittener Darstellung,
- Fig. 5: eine Seitenansicht einer zweiten Ausführungsform der erfindungsgemäßen Vorrichtung in geschnittener Darstellung,
- Fig. 6: eine Draufsicht auf die Schnittlinie C-C von Fig.5 und
- Fig. 7: eine weitere Ausführungsform der erfindungsgemäßen Vorrichtung in geschnittener Darstellung und
- Fig. 8: die zwischen den Spannkörpern sitzenden Spannelemente der Vorrichtung von Fig. 7.

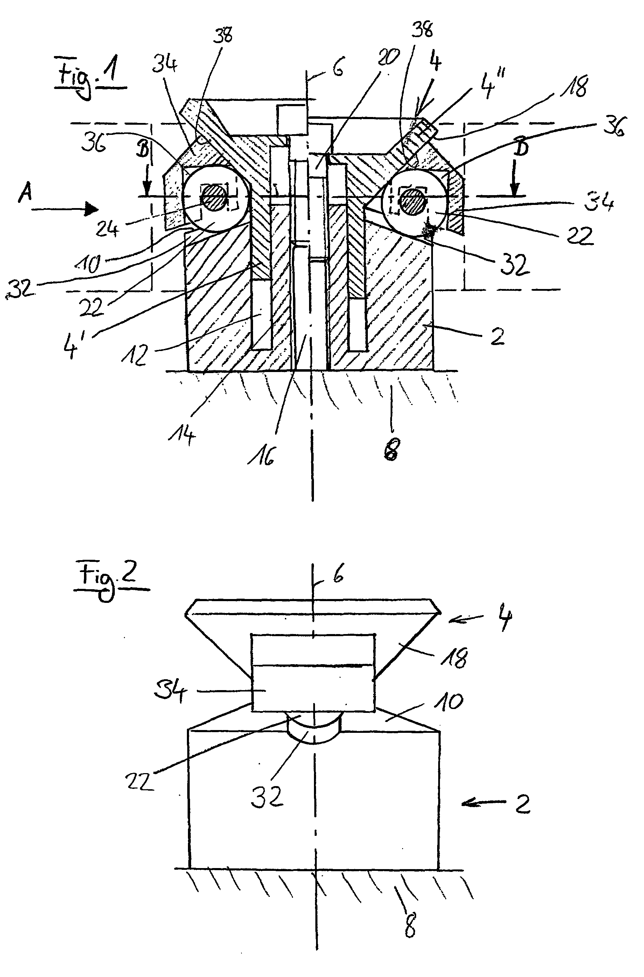

Fig. 1 zeigt eine erste Ausführungsform der erfindungsgemäßen Vorrichtung zum Spannen von Werkstücken, wobei die linke Hälfte der Darstellung eine Ausgangsposition und die rechte Hälfte der Darstellung eine Position zeigt, in der das gestrichelt angedeutete Werkstück verspannt ist. Die Vorrichtung in der ersten Ausführungsform weist einen ersten und einen zweiten Spannkörper 2,4 auf, die auf einer gemeinsamen Achse 6 angeordnet sind. Der erste Spannkörper 2 ist beispielsweise an einem Werkzeugmaschinentisch 8 befestigbar, der lediglich angedeutet ist. Bei der dargestellten Ausführungsform ist der erste Spannkörper 2 im wesentlichen zylindrisch ausgebildet, wobei auch andere prismatische Formen möglich sind, wenn beispielsweise Werkstücke mit rechteckigen Löchern o. ä. verspannt werden sollen. Auf der nach oben gewandten Seite des ersten Spannkörpers 2 ist eine schräggestellte Anlagefläche 10 vorgesehen, die sich kreisringförmig ausgebildet ist. Ferner ist in dem ersten Spannkörper 2 eine kreisringförmige Vertiefung 12 vorgesehen, die einen zylindrischen Mittelteil 14 umgibt. In dem zylindrischen Mittelteil 14 ist wiederum eine Gewindebohrung 16 vorgesehen.

Der zweite Spannkörper 4 umfaßt einen rohrförmigen Teil 4', der dem ersten Spannkörper 2 zugewandt ist, und einen dem ersten Spannkörper 2 abgewandten konischen Teil 4'' aufweist. An dem konischen Teil 4" ist eine kreisringförmige, schräggestellte Anlagefläche 18 vorgesehen, die der Anlagefläche 10 des ersten Spannkörpers 2 zugewandt ist, wobei beide Anlageflächen 10 und 18 schräg zueinander ausgerichtet sind. Der rohrförmige Teil 4' des zweiten Spannkörpers 4 erstreckt sich in die kreisringförmige Vertiefung 12, so daß der erste und zweite Spannkörper 2,4 in Richtung der gemeinsamen Achse 6 gegeneinander verschoben werden können. Durch den konischen Teil 4'' erstreckt sich ferner eine Schraube 20, die gewindeseitig bis in den rohrförmigen Teil 4' ragt und in die Gewindebohrung 16 eingedreht ist. Durch Drehen der Schraube 20 können somit der erste und zweite Spannkörper 2,4 gegeneinander verschoben werden.

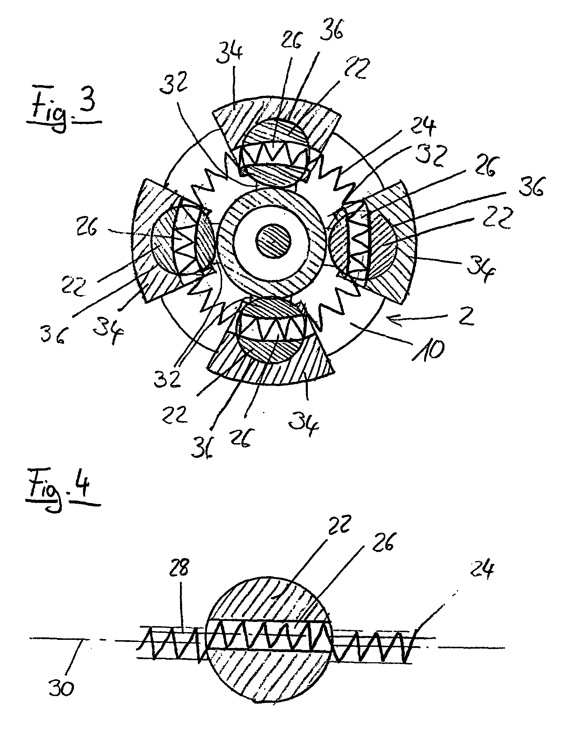

An den schräg zueinander angeordneten Anlageflächen 10,18 des ersten bzw. zweiten Spannkörpers 2,4 stützen sich umfangsmäßig verteilt angeordnete Kugeln 22 ab. Die Kugeln 22 sind, wie insbesondere in Fig. 3 gezeigt, über eine kreisförmige Zugfeder 24 miteinander verbunden, wobei in den Kugeln 22 jeweils eine durchgehende Bohrung 26 vorgesehen ist, durch die sich die Zugfeder 24 erstreckt. Wie aus Fig. 4 hervorgeht, ist die Mittelachse 28 der in der Bohrung 26 liegenden Abschnitte der Zugfeder 24 gegenüber der Mittelachse 30 der nicht in der Bohrung 26 liegenden Abschnitte der Zugfeder 24 seitlich versetzt angeordnet. Auf diese Weise können die Kugeln 22 nicht auf der Zugfeder 24 verschoben werden.

In der Anlagefläche 10 des ersten Spannkörpers 2 sind den Kugeln 22 zugeordnete Führungsnuten 32 vorgesehen (Fig.1, Fig. 3), die sich radial nach außen erstrecken und in denen die Kugeln 22 geführt sind. Aus Fig. 2, die der Einfachheit halber lediglich eine Führungsnut 32 und eine Kugel 22 zeigt, geht hervor, daß die Führungsnuten 32 kreisbogenförmig ausgebildet sind, wobei der Radius der Führungsnuten 32 dem Radius der Kugeln 22 entspricht, so daß die Kugeln 22 linienförmig in den Führungsnuten 32 liegen. Wie aus Fig. 1 (rechte Hälfte) hervorgeht, werden die Kugeln 22 durch die schräge Ausrichtung der Anlageflächen 10,18 radial nach außen gedrückt, sobald der zweite Spannkörper 4 in Richtung des ersten Spannkörpers 2 verschoben wird. Die Führungsnuten 32 ermöglichen dann, daß die in diesen geführten Kugeln 22 auf einem vorgegebenen Weg radial nach außen geführt werden. Dies erleichtert das Positionieren der Kugeln 22 in bezug auf das Werkstück (gestrichelte Darstellung), da eine Verschiebung der Kugeln 22 in Richtung der Zugfeder 24 oder eine Drehung der Kugeln 22 um die eigene, parallel zur Achse 6 verlaufende Achse verhindert wird.

An den Kugeln 22 sind kappenförmige Druckkörper 34 lösbar befestigt, die sich über die nach außen weisende Seite der Kugeln 22 erstrecken. Die Druckkörper 34 haben in der Draufsicht (Fig. 3) die Form eines Kreisringsektors und weisen eine zylindrische Bohrung 36 auf, die den gleiche Radius wie die Kugeln 22 hat, so daß der Druckkörper 34 auf die Kugeln 22 aufsteckbar ist. Der Druckkörper 34 weist weiterhin eine nach oben weisende Fläche 38 auf, die flächig an der Anlagefläche 18 des zweiten Spannkörpers 4 anliegt, so daß ein noch bessere Befestigung an den Kugeln sowie eine verbesserte Führung des Druckkörpers gewährleistet ist. Dadurch, daß die Druckkörper 34 sich auf der radial nach außen weisenden Seite der Kugeln 22 erstrecken, kommen die Druckkörper 34 und nicht die Kugeln 22 zur Anlage an dem Werkstück. Sind die nach außen weisenden Flächen der Druckkörper 34 beispielsweise der Bohrung in dem zu spannenden Werkstück entsprechend ausgebildet, so kommt es zu einer flächigen Anlage an demselben. Somit wird der auf das Werkstück im Bereich der Anlage ausgeübte Druck geringer und Beschädigungen des Werkstückes können vermieden werden.

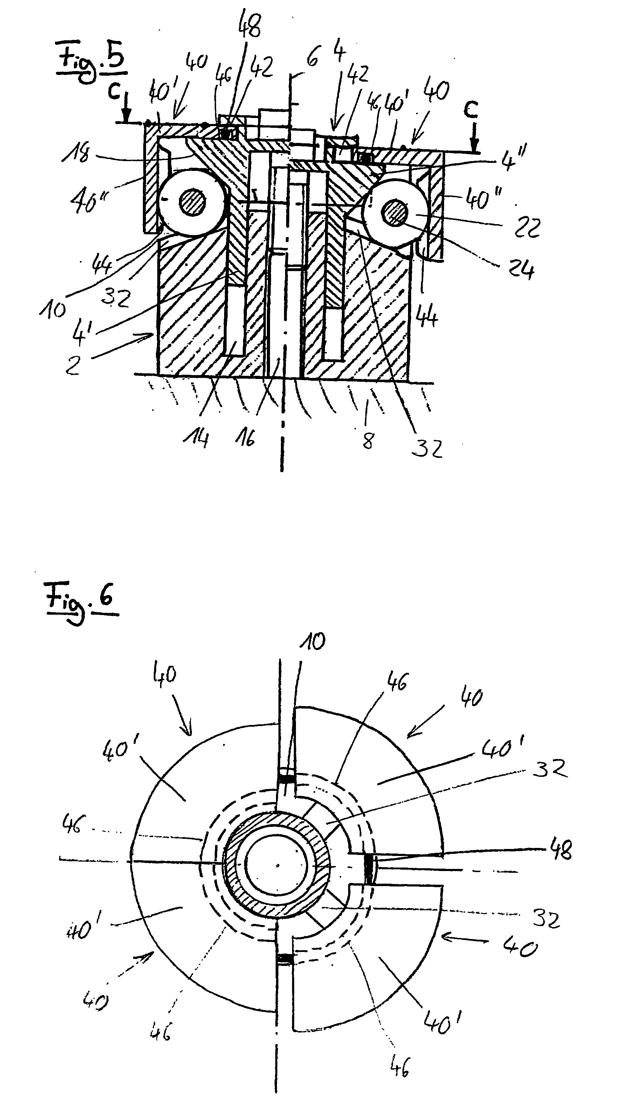

In den Fig. 5 und 6 ist eine zweite Ausführungsform der erfindungsgemäßen Vorrichtung dargestellt, wobei die zweite Ausführungsform der ersten Ausführungsform ähnelt, so daß gleiche Teile mit gleichen Bezugszeichen versehen sind und in diesem Zusammenhang auf die vorangehende Beschreibung verwiesen wird. Die zweite Ausführungsform unterscheidet sich dahingehend von der ersten Ausführungsform, daß Druckkörper 40 vorgesehen sind, die radial verschiebbar an dem zweiten Spannkörper 4 vorgesehen sind. Die Druckkörper 40 weisen einen sich radial nach außen erstreckenden Schenkel 40' und einen daran anschließenden senkrechten Schenkel 40" auf. Die Schenkel 40' sind dabei in einer nach außen weisenden Ringnut 42 an dem zweiten Spannkörper 4 geführt und die Schenkel 40'' grenzen an die nach außen weisende Seite der Kugeln 22 an. An den den Kugeln 22 zugewandten Seiten der Schenkel 40'' ist ferner eine Nut 44 vorgesehen, in der die Kugeln 22 geführt sind. In den Schenkeln 40' ist eine nutförmige Aussparung 46 vorgesehen, durch die sich ein ringförmiges elastisches Element 48, wie z. B. ein Gummiband, erstreckt.

Wie insbesondere in Fig. 6 (rechte Hälfte) dargestellt, wird das elastische Element 48 elastisch aufgeweitet, wenn sich die Kugeln 22 die Druckkörper 40 radial nach außen verschieben. Die anschließende Rückholbewegung der Druckkörper 40 bei Lösen des verspannten Werkstückes wird durch die Kontraktion des elastischen Elementes 48 bewirkt.

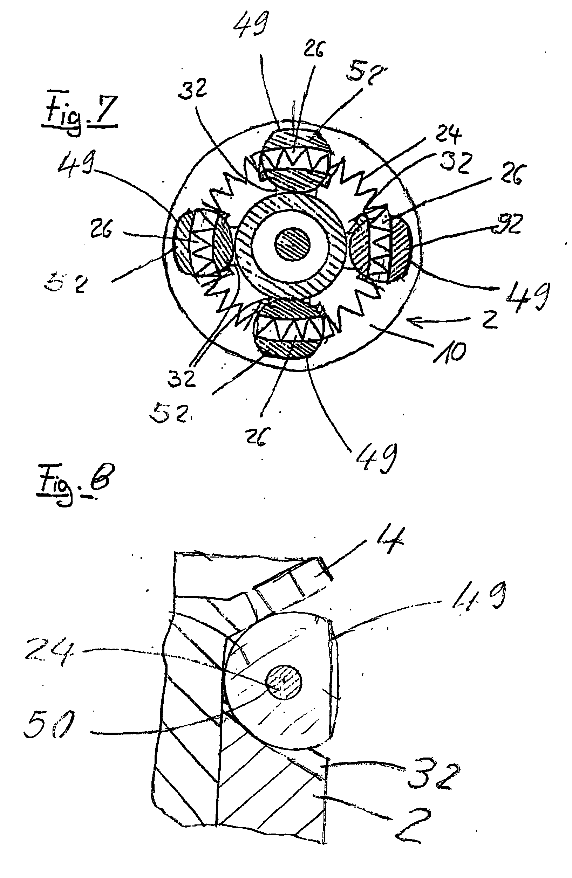

Die Figuren 7 und 8 zeigen eine weitere Ausführungsform der Spannvorrichtung, die sich von den unter Bezugnahme auf die Figuren 1 bis 6 beschriebenen Ausführungsbeispielen durch die Form der Spannelemente unterscheidet. Die einander entsprechenden Teile sind wieder mit den gleichen Bezugszeichen versehen. Die Spannelemente 52 sind bei dieser Ausführungsform kugelförmige Elemente, die an ihren dem zu verspannenden Werkstück zugewandten Außenseiten 49 eine der Kontur des zu verspannenden Werkstücks entsprechende Form aufweisen, d. h. eine von der Kugelform abweichende Form haben. Beispielsweise können die Spannelemente 52 an ihren Außenseiten 49 derart abgeflacht sein, daß sie in ihrer Kontur dem Radius einer Bohrung des Werkstücks entsprechen, in die die Spannvorrichtung eingesetzt werden soll. so daß eine flächige Spannung erreicht wird.

Die Bohrung in den Spannelementen 52 zum Durchführen der Zugfeder 24 ist bezüglich des Mittelpunktes der die Spannelemente umschreibende Kreise exzentrisch angeordnet, wobei sie bezüglich des Mittelpunktes zu der den Spannkörpern 2,4 zugewandten Seite versetzt angeordnet liegt. Dadurch hält die Zugfeder 24 die Spannelemente 52 bei ihrer radialen Verschiebung in einer stabilen Lage, so daß sich die Spannelemente mit ihrer an das zu verspannende Werkstück angepaßten Außenseite 49 nicht verdrehen können.

## Patentansprüche

1. Vorrichtung zum Spannen von Werkstücken mit einem befestigbaren ersten Spannkörper (2) und einem zweiten Spannkörper (4), die auf einer gemeinsamen Achse (6) gegeneinander verschiebbar sind und einander zugewandte, schräg zueinander ausgerichtete Anlageflächen (10,18) aufweisen, wobei sich mindestens zwei federnd miteinander verbundene, umfangsmäßig verteilt angeordnete Spannelemente (22) an den Anlageflächen derart abstützen, daß die Spannelemente (22) durch gegenseitiges Verschieben des ersten und zweiten Spannkörpers (2,4) radial nach außen verschiebbar sind, **dadurch gekennzeichnet, daß** in der Anlagefläche (10,18) des ersten und/oder zweiten Spannkörpers (2,4) den Spannelementen (22) zugeordnete Führungsnuten (32) vorgesehen sind, in denen die Spannelemente (22) radial nach außen geführt sind.

2. Vorrichtung nach Anspruch 1, **dadurch gekennzeichnet, daß** die Spannelemente Kugeln (22) sind.

3. Vorrichtung nach einem der Ansprüche 1 oder 2, **dadurch gekennzeichnet, daß** die Führungsnuten V-förmig ausgebildet sind.

4. Vorrichtung nach Anspruch 2, **dadurch gekennzeichnet, daß** die Führungsnuten (32) kreisbogenförmig ausgebildet sind, wobei der Radius des Kreisbogens dem Radius der Kugel (22) entspricht.

5. Vorrichtung nach einem der Ansprüche 2 bis 4, **dadurch gekennzeichnet, daß** die Kugeln (22) eine durchgehende Bohrung (26) aufweisen, durch die sich eine ringförmige Zugfeder (24) erstreckt.

6. Vorrichtung nach Anspruch 5, **dadurch gekennzeichnet, daß** die Mittelachsen (28) der in den Bohrungen (26) liegenden Abschnitte der Zugfeder (24) gegenüber den Mittelachsen (30) der nicht in der Bohrung (26) liegenden Abschnitte der Zugfeder (24) versetzt angeordnet sind.

7. Vorrichtung nach einem der Ansprüche 2 bis 6, **dadurch gekennzeichnet, daß** an den nach außen weisenden Seiten der Kugeln (22) zusätzliche Druckkörper (34,40) angeordnet sind, die von den Kugeln (22) gegen das Werkstück drückbar sind.

8. Vorrichtung nach Anspruch 7, **dadurch gekennzeichnet, daß** die Druckkörper (34) kappenförmig ausgebildet und mit den Kugeln (22) lösbar verbunden sind.

9. Vorrichtung nach Anspruch 7, **dadurch gekennzeichnet, daß** die Druckkörper (40) radial verschiebbar an dem ersten und/oder zweiten Spannkörper (2,4) angeordnet sind.

10. Vorrichtung nach Anspruch 9, **dadurch gekennzeichnet, daß** die Druckkörper (40) an ihrer an die Kugeln (22) angrenzenden Seite eine Nut (44) aufweisen, in der die Kugeln (22) geführt sind.

11. Vorrichtung nach Anspruch 1, **dadurch gekennzeichnet, daß** die Spannelemente kugelförmige Elemente (52) sind, die an ihren dem zu verspannenden Werkstück zugewandten Außenseiten (49) eine von der Kugelform abweichende Form haben.

## Claims

1. Device for clamping work-pieces with a first clamping body (2) capable of being locked in position and a second clamping body (4), each of which can be moved relative to the other along a common axis (6) and possessing faces (10,18) which are inclined with respect to one another, where at least two clamping elements (22) connected by springs are arranged circumferentially to support the bearing surfaces in such a manner that the clamping elements (22) are displaced radially outwards as a result of opposing displacement of the first and second clamping bodies (2, 4),
**characterised in that** guidance grooves (32) are provided in the bearing surfaces (10, 18) of the first and / or second clamping body (2, 4) of the clamping elements (22) along which the clamping elements are radially guided outwards.

2. Device in accordance with Claim 1, **characterised in that** the clamping elements (22) are spheres.

3. Device in accordance with one of Claims 1 or 2, **characterised in that** the guidance grooves are v-shaped.

4. Device in accordance with Claim 2, **characterised in that** the guidance grooves (32) have the shape of a circular arc such that the radius of the arc corresponds to the radius of the sphere.

5. Device in accordance with one of the Claims 2 to 4, **characterised in that** the spheres (22) are provided with a penetrating hole (26) through which passes a ring-shaped tension spring (24).

6. Device in accordance with Claim 5, **characterised in that** the central axes (28) of the sections of the tension spring (24) lying in the holes (26) are displaced relative to the central axes (30) of the sections of the tension spring (24) not contained within the hole (26).

7. Device in accordance with one of the Claims 2 to 6, **characterised in that** additional pressure bodies (34, 40) are arranged on the outer sides of the spheres (22) and can be pressed against the work-piece by the spheres (22).

8. Device in accordance with Claim 7, **characterised in that** the pressure bodies (34) are cap-shaped and are connected with the spheres in a manner allowing them to be released.

9. Device in accordance with Claim 7, **characterised in that** the pressure bodies (40) are arranged in such a manner as to be capable of radial displacement with respect to the first and / or second clamping body (2,4).

10. Device in accordance with Claim 9, **characterised in that** on the side adjacent to the spheres (22) the pressure bodies (40) exhibit a groove (44) in which the spheres are guided (22).

11. Device in accordance with Claim 1, **characterised in that** the clamping elements are sphere-shaped elements (52) which on their outer surfaces (49) facing the work-piece which is to be clamped have a shape which departs from the spherical.

## Revendications

1. Dispositif pour serrer des pièces avec un premier corps de serrage (2) pouvant être fixé et un deuxième corps de serrage (4), qui peuvent être déplacés l'un par rapport à l'autre sur un axe (6) commun et présentent des surfaces de contact (10, 18) tournées l'une vers l'autre et orientées en biais, au moins deux éléments de serrage (22) reliés entre eux de façon élastique et disposés à la périphérie s'appuyant sur les surfaces de contact de telle façon que les éléments de serrage (22) peuvent être déplacés radialement vers l'extérieur par un déplacement en sens opposés des premier et second corps de serrage (2, 4)
**caractérisé en ce qu'**il est prévu, dans la surface de contact (10, 18) du premier et/du second corps de serrage (2, 4), des rainures de guidage (32) associées aux éléments de serrage (22), dans lesquelles les éléments de serrage (22) sont guidés radialement vers l'extérieur.

2. Dispositif selon la revendication 1, **caractérisé en ce que** les éléments de serrage sont des billes (22).

3. Dispositif selon l'une quelconque des revendications 1 et 2, **caractérisé en ce que** les rainures de guidage sont en forme de V.

4. Dispositif selon la revendication 2, **caractérisé en ce que** les rainures de guidage (32) sont en forme d'arc de cercle, le rayon de l'arc de cercle correspondant au rayon de la bille (22).

5. Dispositif selon l'une quelconque des revendications 2 à 4, **caractérisé en ce que** les billes (22) présentent un alésage (26) traversant, dans lequel s'étend un ressort de traction (24) de forme annulaire.

6. Dispositif selon la revendication 5, **caractérisé en ce que** les axes médians (28) des parties du ressort de traction (24) situées dans les alésages (26) sont disposés de façon décalée par rapport aux axes médians (30) des parties du ressort de traction (24) non situées dans l'alésage (26).

7. Dispositif selon l'une quelconque des revendications 2 à 6, **caractérisé en ce que**, sur les côtés, tournés vers l'extérieur, des billes (22) sont disposés des corps de pression (34, 40) supplémentaires, qui peuvent être appuyés par les billes (22) contre la pièce.

8. Dispositif selon la revendication 7, **caractérisé en ce que** les corps de pression (34) sont en forme de capuchons et sont reliés de façon amovible aux billes (22).

9. Dispositif selon la revendication 7, **caractérisé en ce que** les corps de pression (40) sont disposés sur les premier et/ou second corps de serrage (2, 4) de façon à pouvoir coulisser dans le sens radial.

10. Dispositif selon la revendication 9, **caractérisé en ce que** les corps de pression (40) présentent sur leur côté contigu aux billes (22) une rainure (44) dans laquelle les billes (22) sont guidées.

11. Dispositif selon la revendication 1, **caractérisé en ce que** les éléments de serrage sont des éléments (52) sphériques, qui ont une forme différente de la forme sphérique sur leurs côtés extérieurs (49) tournés vers la pièce à serrer.
